Europäisches Patentamt

European Patent Office

Office européen des brevets

(11) Veröffentlichungsnummer: **0 421 135 A2**

## EUROPÄISCHE PATENTANMELDUNG

(21) Anmeldenummer: 90117035.7

(22) Anmeldetag: 05.09.90

(51) Int. Cl.5: **G01M 11/00, B23K 26/02**

(30) Priorität: 04.10.89 DE 3933057

(43) Veröffentlichungstag der Anmeldung:
**10.04.91 Patentblatt 91/15**

(84) Benannte Vertragsstaaten:
**BE CH FR GB IT LI**

(71) Anmelder: **DORRIES SCHARMANN GmbH**
**Dörriesstrasse 2**
W-5353 Mechernich(DE)

(72) Erfinder: **Rothe, Rudiger, Dr.-Ing.**
**Wilde Rodung 4a**
**W-2829 Bremen 70(DE)**

(74) Vertreter: **Weitzel, Wolfgang, Dr.-Ing.**
**Friedenstrasse 10**
**W-7920 Heidenheim(DE)**

(54) **Verfahren und Vorrichtung zur Bestimmung der Position und des Durchmessers des Brennflecks (Fokus) eines Laserstrahls, insbesondere zur Verwendung für die Werkstoffbearbeitung mit einem Hochleistungs-Laserstrahl.**

(57) Bei einem Verfahren zur Bestimmung der Position und des Durchmessers des Brennflecks (Fokus) eines Laserstrahls, insbesondere eines Hochleistungslaserstrahls, wird in den Strahlengang eines fokussierten Laserstrahls ein rotationssymmetrischer, den Laserstrahl auf einer Brennlinie abbildender Reflektor eingeführt. Der am Reflektor reflektierte Laserstrahl wird über mindestens einen dem Reflektor in der Brennlinie fest zugeordneten Sensor erfaßt und die Brennebene, die seitliche Position des Brennpunkts und der Durchmesser des Brennflecks werden dann über im Sensor erfaßte Meßwerte bestimmt, wobei der Sensor relativ zur Fokussieroptik des Laserstrahls beziehungsweise relativ zum Reflektor verschoben wird.

Damit steht ein Verfahren der gattungsgemäßen Art zur Verfügung, bei dem die Leistungsflußdichte des Lasers soweit reduziert wird, daß der Laser sicher und eindeutig mit Hilfe von Sensoren ausgemessen werden kann.

Fig. 1

EP 0 421 135 A2

# VERFAHREN UND VORRICHTUNG ZUR BESTIMMUNG DER POSITION UND DES DURCHMESSERS DES BRENNFLECKS (FOKUS) EINES LASERSTRAHLS, INSBESONDERE ZUR VERWENDUNG FÜR DIE WERK-STOFFBEARBEITUNG MIT EINEM HOCHLEISTUNGSLASERSTRAHL

Die vorliegende Erfindung bezieht sich auf ein Verfahren zur Bestimmung der Position und des Durchmessers des Brennflecks (Fokus) eines Laserstrahls; die Erfindung bezieht sich gleichermaßen auf eine Vorrichtung zur Ausführung dieses Verfahrens.

Die Anwendung von Laserstrahlen zur Materialbearbeitung ist lange bekannt. Schweißen, Schneiden, Bohren, Abtragen, Härten und Oberflächenveredlung gehören heute zum Aktionsfeld des Lasers.

Bei allem wird von den hervorragenden und gleichbleibenden Eigenschaften des Lasers Gebrauch gemacht, nämlich davon, daß mit einem Laserstrahl eine gezielte und damit konzentrierte Wärmeeinbringung in ein Werkstück möglich ist. Damit lassen sich Werkstücke in hervorragender Weise verzugsarm bearbeiten. Als Beispiel für eine derartige Verwendung eines Laserstrahls wird auf die ältere Anmeldung P 39 25 646 verwiesen, in der ein Verfahren und eine Vorrichtung zum Formabtragen von Werkstoff mittels eines Laserstrahls vorgeschlagen wird. Der Kern dieser älteren Anmeldung liegt darin, daß mit dem Laserstrahl ein bestimmtes Werkstoffvolumen verdampft bzw. aufgeschmolzen wird, und daß dieses Werkstoffvolumen dann mit einem Gasstrahl weggeblasen wird.

Um die Eigenschaften des Laserstrahls optimal nutzen zu können, d.h. um den Laser optimal einsetzen zu können, müssen - und dies gilt ganz besonders in Verbindung mit Werkstück- bzw. Werkstoffbearbeitungen - die Position des Brennflecks, also des Fokus, und dessen Durchmesser genau bekannt sein. Beide Größen werden einerseits durch die Eigenschaften des Laserstrahls an sich und andererseits durch die Eigenschaften der Komponenten der Resonator- und Übertragungsoptiken für diesen Laserstrahl bestimmt. Bei hohen Strahlleistungen ändern sich die genannten Eigenschaften in Abhängigkeit vom Zustand und von der Belastung dieser Optiken. Dies führt dazu, daß ein Laserfokus jeweils bei der für den aktuellen Einsatzfall vorgesehenen Leistung ermittelt werden muß. Da die Fokussierung von Strahlen hoher Lei-stung, beispielsweise $CO_2$-Hochleistungslasern zu sehr hohen Leistungsflußdichten von $10^3$ W/mm$^2$ und mehr führt, sind die erforderlichen Messungen am Laserfokus relativ problematisch. Leistungsflußdichten der genannten Größenordnung zerstören Sensoren, wenn sie in den Fokus gebracht werden, in kurzer Zeit; Sensoren müssen somit gegebenenfalls sehr schnell durch den Fokus bewegt werden.

Auf dieser Basis existieren Meßgeräte, bei denen mit sehr hoher Drehzahl eine reflektierende Nadel durch den Laserstrahl gedreht wird. Darüberhinaus sind auch Geräte bekannt, bei denen der fokussierte Laserstrahl mit Hilfe von Drehspiegeln schnell über eine Loch- oder Schlitzblende abgelenkt wird. Die bekannten Geräte sind jedoch sehr aufwendig; sie werden darüberhinaus häufig zerstört und führen aus unterschiedlichen Gründen zu erheblichen Meßfehlern.

Eine anderweitige Methode nutzt die Wirkung von Strahlen auf Werkstoffe. Dabei wird ein Stab aus Kunststoff oder Holz mehr oder weniger geneigt sehr schnell durch den Fokusbereich bewegt und aus der sichtbaren Geometrie der Einwirkungszone auf die Fokuslage geschlossen. Diese Methode ist sehr ungenau, da die Wirkung unter anderem durch nicht erfaßte Effekte aus der zeitlichen Integration beeinflußt wird; auch kann bei schlank fokussierten Strahlen die Fokusposition nur schwer ermittelt werden.

Die der vorliegenden Erfindung zugrunde liegende Aufgabe besteht darin, ein Verfahren der gattungsgemäßen Art anzugeben, bei dem die Leistungsflußdichte derart reduziert wird, daß der Fokus sicher und eindeutig mit Hilfe von Sensoren erfaßt werden kann. Die Aufgabe besteht weiter darin, eine Vorrichtung zur Ausführung dieses Verfahrens anzugeben.

Die genannte Aufgabe wird - verfahrensmäßig - dadurch gelöst, daß in den Strahlengang eines fokussierten Laserstrahls ein rotationssymmetrischer, den Laserstrahl auf einer Brennlinie abbildender Reflektor eingeführt wird, daß der am Reflektor reflektierte Laserstrahl über mindestens einen dem Reflektor in der Brennlinie fest zugeordneten Sensor erfaßt wird, und daß über den im Sensor erfaßten Meßwert die Brennebene, sowie der Durchmesser des Brennpunkts bestimmt werden, indem der Reflektor mit dem Sensor in Strahlrichtung des Laserstrahls verschoben wird. Dabei kann der Reflektor von der divergierenden Seite des Laserstrahls her (Anspruch 2) oder von der konvergierenden Seite des Laserstrahls her (Anspruch 3) in den Laserstrahl eingeführt werden.

Die Vorrichtung zur Ausführung dieses Verfahrens ist dadurch charakterisiert, daß ein hochreflek-tierender rotationssymmetrischer Reflektor vorge-sehen ist, dessen vom Laserstrahl beaufschlagte Reflexionsoberfläche so ausgebildet ist, daß der Laserstrahl in einer komplementären kreisringförmigen Brennlinie abgebildet wird, und daß axialsymmetrisch zum Reflektor eine Mehrzahl von, insbesondere vier, Sensoren angeordnet sind, über die die Brennebene und der Fokusdurchmesser bestimmbar sind oder daß ein Sensor konzentrisch zum Reflektor um diesen bewegt wird. Weiterbildungen und besondere Ausgestaltungen dieser Vorrichtung sind Gegenstand der weiteren Unteransprüche.

Die Einzelheiten der Erfindung werden im folgenden anhand der Zeichnungen näher erläutert. Diese zeigt in

Fig. 1 ein erstes Ausführungsbeispiel einer Vorrichtung zur Bestimmung der Position und des Durchmessers des Fokus eines Laserstrahls;

Fig. 2 ein zweites Ausführungsbeispiel einer derartigen Vorrichtung;

Fig. 3 ein drittes Ausführungsbeispiel einer derartigen Vorrichtung.

Der Kern der in der Zeichnung dargestellten Vorrichtung besteht jeweils darin, daß - im folgenden Reflektor genannte -hochreflektierende Elemente bestimmter Geometrien so in den fokussierten Laserstrahl eingebracht werden, daß diese Elemente einerseits nur gering belastet werden und andererseits den Brennfleck (Fokus) auf eine Brennlinie transformieren. Längs dieser Brennlinie sind dabei geeignete Sensoren angeordnet, die eine relativ kleine Empfangsfläche, d.h. eine Meßfläche die kleiner ist als der Fokusdurchmesser, aufweisen. Erforderlich ist mindestens ein Sensor.

Sind mehrere Sensoren angeordnet, so kann auch die seitliche Lage des Fokus durch seitliches Verschieben des Gerätes relativ zum Laserstrahl, d.h. zu dessen Fokus ermittelt werden. Bei einem einzelnen Sensor ist dieser in mehreren Meßzyklen auf unterschiedliche Positionen zu bringen.

Die Fokuslage in Achsrichtung (Strahlrichtung des Laserstrahls) selbst wird - wie anschließend anhand der Zeichnung erläutert wird - durch Verschieben der Vorrichtung relativ zum Strahl parallel bzw. koaxial zur Strahlrichtung ermittelt.

Zu den Figuren im Einzelnen:

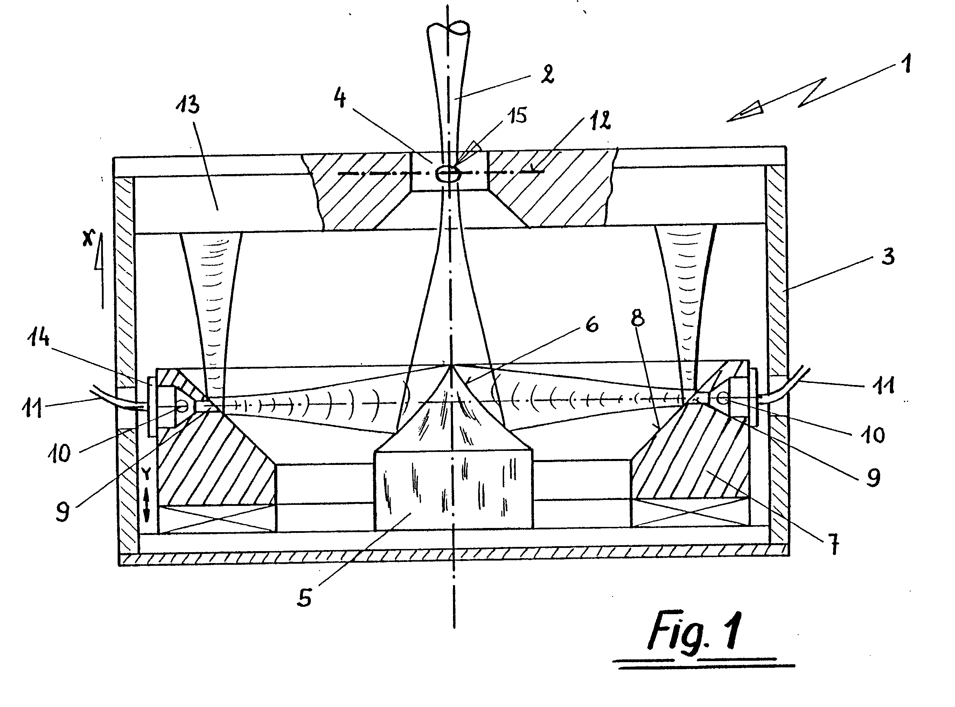

Gemäß Fig. 1 besteht die Vorrichtung 1 zur Bestimmung der Position und des Fokusdurchmessers eines Laserstrahls 2 aus einem dosenförmigen Gehäuse 3 , dessen eine Stirnseite axialsymmetrisch eine Kreisöffnung 4 aufweist, der im Inneren des Gehäuses 3 ein Reflektor 5 gegenüberliegt. Dieser Reflektor 5 ist im Ausführungsbeispiel nach Fig.1 ein rotationssymmetrischer kegeliger Körper, dessen Kegelspitze hochgenau gedreht ist, und zwar so, daß ihre Mantellinie 6 von der Spitze weg die Form eines Rotationsellipsoids hat.

Konzentrisch zum Reflektor 5 ist ein kreisringförmiger Umlenkspiegel 7 vorgesehen, der an der dem Reflektor 5 zugewandten Seite eine 45°-konische Reflektionsfläche 8 aufweist. Um jeweils 90° verdreht zueinander sind im Umlenkspiegel 7, und zwar korrespondierend zur Reflexionsrichtung des Reflektors 5 , view Detektionsbohrungen 9 vorgesehen, denen je ein Sensor 10 zugeordnet ist. Die in den Sensoren 10 ermittelten bzw. generierten Meßwerte werden über Meßleitungen 11 nach außen zu einer Meßstelle übertragen. Die genannten Detektionsbohrungen 9 haben dabei einen relativ geringen Durchmesser von unter etwa 0,3 mm.

Die weiteren Einzelheiten der in Fig. 1 dargestellten Vorrichtung 1 werden im folgenden über deren Funktionsweise bzw. Verwendung erläutert.

Die Vorrichtung 1 in ihrer Verwendung als Meßgerät zur Bestimmung der charakteristischen Daten Position und Durchmesser des Fokus eines Laserstrahls 2 wird koaxial zu dessen Strahlrichtung von der divergierenden Seite her, d.h. in Strahlrichtung betrachtet von der hinter der Brennebene 12 liegenden Seite her, in Richtung Brennebene 12 bewegt (Pfeil X). Der Laserstrahl 2 durchdringt die Kreisöffnung 4 der Vorrichtung 1 und wird - im Bereich des nach der Fokussierung in der Brennebene 12 divergierenden Teils des Laserstrahls 2- am Reflektor 5 abgelenkt. Diese Reflexion ist so, daß der gebündelte, nahezu runde Laser strahl 2 scheibenförmig auf dem kreisringförmigen Umlenkspiegel 7 abgebildet wird. Der relativ geschlossene (kompakte) Laserstrahl 2 wird somit gewissermaßen aufgelöst und als scheibenförmiger Strahl auf einer sogenannten Brennlinie abgebildet; die Leistungsflußdichte dieses scheibenförmigen Strahls ist dabei wesentlich geringer als die des eintretenden Laserstrahls 2.

Der scheibenförmige Strahl wird dann seinerseits an der 45°-Reflex ionsfläche 8 des Umlenkspiegels 7 reflektiert und trifft als kreisringförmiger Strahl auf einen Absorber 13 auf, über den die thermische Energie des Laserstrahls 2 abgeführt wird.

Ein Teil des am Reflektor 5 abgelenkten Laserstrahls durchdringt die Detektionsbohrungen 9 und wird hier von den Sensoren 10 erfaßt. Im einfachsten Falle werden als Sensoren 10 Thermofühler verwendet, in denen die Energie des Laserstrahls 2 in Wärme umgewandelt wird, die dann über eine Wärmesenke 14 abgeführt wird. Der Wärmefluß im Thermofühler führt zu einem Temperaturgradienten, der in einer geeigneten Meßanordnung zur Anzeige gebracht wird.

Wenn nun die Vorrichtung 1 mit dem Reflektor 5 den zum Brennpunkt 15 , d.h. zur Brennebene 12 komplementären Abstand hat, liegen die Detektionsbohrungen 9 in der Brennlinie des als Reflektor 5 dienenden Rotationsellipsoids. Die Brennebene 12 für die Brennweite befindet sich dabei im zweiten Brennpunkt des Rotationsellipsoids. (Dabei wird von der Eigenschaft einer Ellipse Gebrauch ' gemacht, daß nämlich alle Strahlen aus einem Brennpunkt nach einer Reflexion in den anderen Brennpunkt gelangen, wobei Strahlen aus der Brennpunktnähe in die Nähe des anderen Brennpunkts abgelenkt werden).

Die seitliche Lage des Fokus wird dabei zunächst dadurch ermittelt, daß sie als auf der Vorrichtungsachse liegend betrachtet werden kann, wenn die Temperaturanzeigen der Sensoren 10 symmetrisch sind.

Der Fokus 15 selbst liegt dann in der Brennebene 12, wenn maximale Temperatur angezeigt wird; diese Einstellung kann über eine koaxiale Verschiebung der Vorrichtung 1 in Strahlrichtung relativ zur Fokussieroptik des Laserstrahls 2 aufgefunden werden.

Der Durchmesser des Fokus 15 läßt sich schließlich dadurch bestimmen, daß der ringförmige Umlenkspiegel 7 mit den Detektionsbohrungen 9 in Strahlrichtung ganz bewußt und definiert verschoben wird, und zwar auch relativ zum Reflektor 5 (Pfeil Y). Der Fokusdurchmesser entspricht bei geeigneter Ausführung der Vorrichtung 1 dann demjenigen Verschiebungsbetrag um die Nullage, für den die Temperaturanzeige jeweils $1/e^2 = 13\%$ des Maximalwertes beträgt.

Der Vollständigkeit halber sei bezüglich des Ausführungsbeispiels nach Fig. 1 noch angemerkt, daß der Reflektor 5, der Umlenkspiegel 7 und der Absorber 13 gekühlte, insbesondere wassergekühlte, Körper sind. Hinsichtlich der Mantellinie 6 des Reflektors 5 wurde angegeben, daß diese die Kontur eines Rotationsellipsoids habe; das Ausführungsbeispiel nach Fig. 1 läßt sich auch mit einem Reflektor 5 konzipieren, dessen Mantellinie die Kontur eines Hyperboloids hat. Und es sei auch roch angemerkt, daß die Sensoren 10 als Thermoelemente, Widerstandsthermometer, Bolometer, Dioden, pyroelektrische Empfangseinrichtungen und dergleichen, ausgebildet sein können.

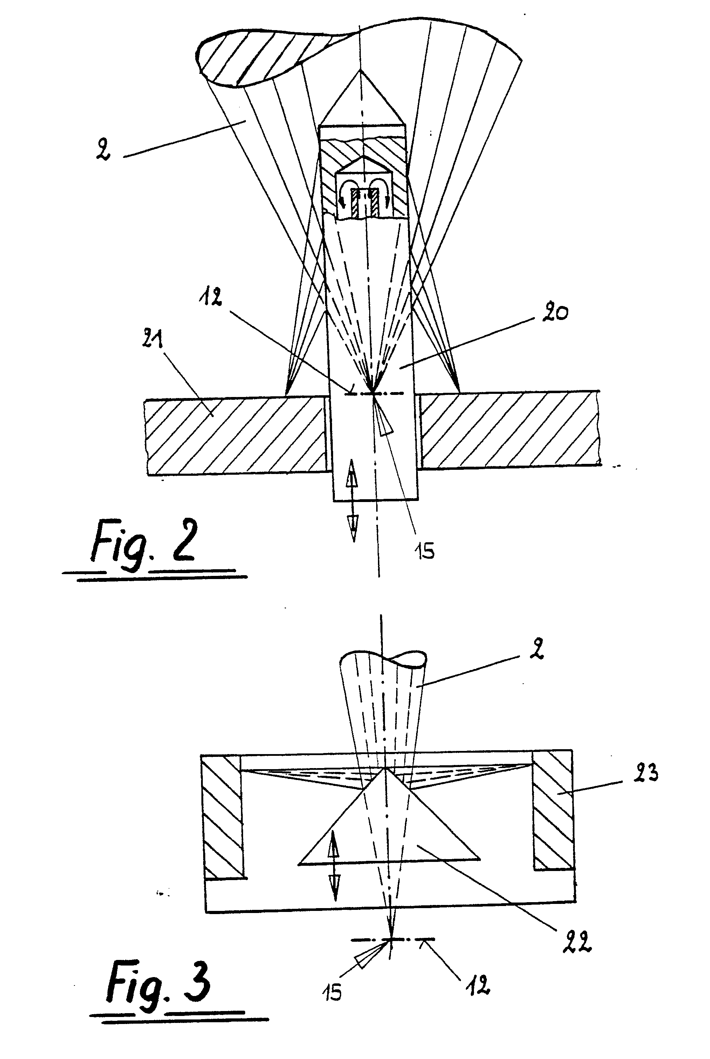

Fig. 2 zeigt ein zweites Ausführungsbeispiel zur Ermittlung der Fokuslage und des Fokusdurchmessers. Hierbei wird der konvergierende Teil des fokussierten Laserstrahls 2 an einem Zylinderspiegel 20 reflektiert, dessen Achse parallel zur Strahlachse liegt. Der reflektierte Laserstrahl 2 wird auf einen quer zur Strahlrichtung liegenden, wassergekühlten Absorber 21 aus z.B. Keramik in einer kreisförmigen Brennlinie abgebildet, längs der die Oberfläche des Absorbers 21 zum Glühen gebracht wird.

Die Brennebene 12 liegt dann in der Ebene der Oberfläche des Absorbers 21, wenn die Glühemission der erhitzten Oberfläche maximal ist. Dies kann einerseits visuell festgestellt werden; es ist aber auch möglich, die Fokuslage über die Leuchtintensität auch elektronisch dadurch zu erfassen, daß im doppelten Radius des Zylinderspiegels 20 Detektionsbohrungen mit integrierten Sensoren angeordnet sind.

Der Brennpunkt (Fokus) 15 liegt dabei dann koaxial zur Achse des Zylinderspiegels 20, wenn der leuchtende glühende Ring symmetrisch zum Zylinderspiegel 20 liegt.

Im dritten Ausführungsbeispiel nach Fig. 3 liegt der Brennpunkt (Fokus 15) des an einem wassergekühlten Kegelspiegel 22 reflektierten Laserstrahl 2 dann in der Brennebene 12, wenn auf einem ringförmigen koaxialen Absorber 23 längs der Brennlinie ein Leuchtmaximum festgestellt wird, und wenn dabei die Ringebene des Absorbers 23 senkrecht zur Kegelachse steht.Die Strahlrichtung und die Achse des Kegelspiegels 22 stimmen dann überein, wenn die Leuchterscheinung genau symmetrisch ist.

## Ansprüche

1. Verfahren zur Bestimmung der Position und des Durchmessers des Brennflecks (Fokus) eines Laserstrahls, insbesondere eines Hochleistungslaserstrahls, dadurch gekennzeichnet,

daß a) in den Strahlengang eines fokussierten Laserstrahls ein rotationssymmetrischer, den Laserstrahl auf einer Brennlinie abbildender Reflektor eingeführt wird,

daß b) der am Reflektor reflektierte Laserstrahl über mindestens einen dem Reflektor in der Brennlinie fest zugeordneten Sensor erfaßt wird,

daß c) über den im Sensor erfaßten Meßwert die Brennebene bestimmt wird, indem der Reflektor mit dem Sensor in Strahlenrichtung des Laserstrahls relativ zu dessen Fokussieroptik verschoben wird,

daß d) über den im Sensor erfaßten Meßwert die seitliche Position des Brennpunktes bestimmt wird, indem der Reflektor mit dem Sensor senkrecht zur Strahlenrichtung des Laserstrahls relativ zu dessen Fokussieroptik verschoben wird, und daß e) über den im Sensor erfaßten Meßwert der Durchmesser des Brennflecks bestimmt wird, indem der Sensor relativ zum Reflektor verschoben wird.

2. Verfahren nach Anspruch 1, dadurch gekennzeichnet, daß der Reflektor von der divergierenden Seite des Laserstrahls her, d.h. in Strahlrichtung betrachtet hinter der Brennebene eingeführt wird.

3. Verfahren nach Anspruch 1, dadurch gekennzeichnet, daß der Reflektor auf der konvergierenden Seite des Laserstrahls, d.h. in Strahlrichtung betrachtet vor der Brennebene eingeführt wird.

4. Vorrichtung zur Ausführung des Verfahrens nach Anspruch 1, 2 oder 3, dadurch gekennzeichnet, daß a) ein hochreflektierender rotationssymmetrischer Reflektor vorgesehen ist, dessen vom Laserstrahl beaufschlagte Reflexionsoberfläche so ausgebildet ist, daß der Laserstrahl in einer komplementären kreisringförmigen Brennlinie abgebildet wird, und

daß b) axialsymmetrisch zum Reflektor eine Mehrzahl von, insbesondere vier, Sensoren angeordnet sind, über die die Brennebene und der Fokusdurchmesser bestimmbar sind. (Fig. 1, 2, 3)

5. Vorrichtung nach Anspruch 4,

wobei der Reflektor von der divergierenden Seite des Laserstrahls her eingeführt wird,

dadurch gekennzeichnet,

daß die Reflexionsoberfläche die Form eines Rotationsellipsoids oder eines Rotationshyperboloids hat, und

daß axialsymmetrisch zum Reflektor ein kreisringförmiger Umlenkspiegel angeordnet ist, der in der Brennlinie des Reflektors einerseits eine der Anzahl der Sensoren entsprechende Anzahl von Detektionsbohrungen mit eingesetzten Sensoren aufweist und andererseits den vom Reflektor kommenden kreisscheibenförmigen Laserstrahl zu einem thermischen Absorber ablenkt. (Fig. 1)

6. Vorrichtung nach Anspruch 4,

wobei der Reflektor auf der konvergierenden Seite des Laserstrahls eingeführt wird,

dadurch gekennzeichnet,

daß die Reflexionsoberfläche die Form eines Zylinders oder eines Kegels hat, und

daß axialsymmetrisch zum Reflektor ein kreisringformiger thermischer Absorber angeordnet ist, der in der Brennlinie des Reflektors eine der Anzahl der Sensoren entsprechende Anzahl von Detektionsbohrungen mit eingesezten Sensoren aufweist. (Fig. 2, 3)

7. Vorrichtung nach einem der Ansprüche 4 bis 6,

dadurch gekennzeichnet,

daß der Reflektor wassergekühlt ist.

8. Vorrichtung nach Anspruch 5 oder 7,

dadurch gekennzeichnet,

daß der Umlenkspiegel und der Absorber wassergekühlt sind.

9. Vorrichtung nach Anspruch 6 oder 7,

dadurch gekennzeichnet,

daß der Absorber wassergekühlt ist.

*Fig. 1*

EP 0 421 135 A2

_Fig. 2_

_Fig. 3_